# EUROPEAN PATENT APPLICATION

(11) **EP 2 387 245 A2**
(43) Date of publication of application: **16.11.2011**
(21) Application number: 11160608.3
(22) Date of filing: 31.03.2011
(51) Int. Cl.: H04N 13/00

(54) **Three dimensional (3D) image display apparatus, and driving method thereof**

(30) Priority: 13.05.2010 KR 20100044931
(71) Applicant: SAMSUNG ELECTRONICS CO., LTD., Suwon-si Gyeonggi-do 442-742 (KR)
(72) Inventor: Seong, Ki-bum, Gyeonggi-do (KR); Sung, Jun-ho, Seoul (KR)
(74) Representative: Clark, David James

(57) **Abstract**

A three dimensional (3D) image display apparatus is provided. The 3D image display apparatus includes an image input unit which receives a 3D image, an image processing unit which divides the input 3D image into a left-eye image and a right-eye image and processes the left and right-eye images, an image output unit which comprises one sheet of polarization film which is capable of switching a direction of polarization, to provide a different direction of polarization with respect to the left and right-eye images being displayed, by switching the direction of polarization of the polarization film, and a control unit which controls the image output unit so that the left and right-eye images processed at the image processing unit are time-divided and displayed alternately. As a result, 3D images are represented conveniently.

## Description

### BACKGROUND

### 1. Field

Apparatuses and methods consistent with what is described herein relate to three dimensional (3D) image display apparatus and a driving method thereof.

### 2. Description of the Related Art

Three-dimensional (3D) image technology has been applied in various fields such as communications, broadcasting, medical services, education, military, computer games, computer animation, virtual reality, computer-aided design (CAD), industrial technology, or the like. All of the above areas require in common the 3D image technology which is a key enabling technology of the next generation 3D multimedia telecommunication.

The illusion of depth is perceived for various reasons, including changes in crystalline lens's thickness depending on an object position, angle difference between a left eye, a right eye and the object, changes in position and form of the object between a left eye and a right eye, disparity caused by object movement, emotion of the perceiver, and memory effect, and so on.

The binocular disparity, caused by about 6 to 7 centimeters of the distance between two eyes, is one of the most influential factors in perceiving depth illusion. The binocular disparity leads to the angle difference, causing two eyes to have different images from each other and thus enabling a human brain to perceive an object with depth by fusing the two different pieces of image information precisely as these are received through the retina.

The 3D image display apparatus is generally classified into an eyeglass type and a non-eyeglass type. The eyeglass type apparatus may mainly include in its category: a color filter apparatus which filters an image using a color having complementary color filter segments; a polarizing filter type apparatus which divides an image into left- and right-eye images using shading effect caused by combining orthogonal polarized light elements; and a shutter glasses type apparatus which blocks alternately a left eye and a right eye in response to a synchronization signal that projects a left-eye image signal and a right-eye image signal onto a screen.

The polarizing filter type uses passive type polarization glasses in which left and right glasses have different polarizations.

The active retarder applies the time-division method to the polarization glasses to maintain a desirable level of resolution and ability to divide left and right-eye images.

However, the active retarder has disadvantages associated with the time-division method, which are mainly complicated driving and complicated structural alignment, and subsequent occurrence of cross-talk.

### SUMMARY

Exemplary embodiments overcome the above disadvantages and other disadvantages not described above. Also, the exemplary embodiments are not required to overcome the disadvantages described above, and an exemplary embodiment of the present inventive concept may not overcome any of the problems described above.

According to one exemplary embodiment, a three dimensional (3D) image display apparatus and a driving method thereof are provided, in which the 3D image display apparatus represents a 3D image using an active polarization film capable of switching a direction of polarization.

In one exemplary embodiment, a three dimensional (3D) image display apparatus is provided, which may include an image input unit which receives a 3D image, an image processing unit which divides the input 3D image into a left-eye image and a right-eye image and processes the left and right-eye images, an image output unit which comprises a polarization film operable to switch a direction of polarization to provide different directions of polarization with respect to the left-eye and right-eye images being displayed, by switching the direction of polarization of the polarization film, and a control unit which controls the image output unit so that the left-eye and right-eye images processed at the image processing unit are time-divided and displayed alternately.

The image output unit may include a display panel unit which displays the left-eye and right-eye images, a polarization film unit which comprises the polarization film which corresponds to an entire area of the display panel unit, and a switching unit which switches the direction of polarization of the polarization film to provide a first polarization direction if the left-eye image is displayed, or provide a second polarization direction if the right-eye image is displayed.

The control unit may control the display panel unit to display a black image in between the left-eye image and the right-eye image.

The display panel unit may be a 240 Hz LCD panel.

The image output unit may additionally include a backlight illuminating unit which emits light onto the display panel unit, and a backlight driving unit which drives the backlight illuminating unit. The control unit may control the backlight driving unit to drive the backlight illuminating unit for a predetermined time period while the left-eye and right-eye images are displayed.

The display panel unit may be a 120 Hz LCD panel.

The polarization film unit and the switching unit may be configured as an active retarder which is not divided.

In another exemplary embodiment, a method of driving a three dimensional (3D) image display apparatus is provided, wherein the method may include receiving a 3D image, dividing the received 3D image into a left-eye image and a right-eye image and processing the left-eye and right-eye images, time-dividing the processed left-eye and the processed right-eye images and alternatingly displaying the left-eye an right-eye images by switching a direction of polarization of a polarization film, to provide a different direction of polarization with respect to the left-eye and right-eye images being displayed.

The 3D image display apparatus may include an image output unit which outputs the left-eye and right-eye images, and the image output unit may include a display panel which displays the left-eye and right-eye images, a film which corresponds to an entire area of the display panel and is capable of switching the direction of polarization, and a switching element which switches the direction of polarization of the polarization film to provide a first polarization direction if the left-eye image is displayed, or provide a second polarization direction if the right-eye image is displayed.

Displaying a black image in between the left-eye image and the right-eye image may additionally be implemented.

The display panel may be a 240 Hz LCD panel.

The image output unit may additionally include a backlight illuminating unit which emits light onto the display panel, and the step of turning on the backlight illuminating element for a predetermined time period and while the left and right-eye images are displayed, may additionally be implemented.

The display panel may be a 120 Hz LCD panel.

The polarization film unit and the switching unit may be configured as an active retarder which is not divided.

### BRIEF DESCRIPTION OF THE DRAWINGS

The above and/or other aspects of what is described herein will be more apparent by describing certain exemplary embodiments with reference to the accompanying drawings, in which:
FIG. 1 illustrates a three dimensional (3D) image providing system according to an exemplary embodiment;
FIG. 2 is a block diagram of the 3D image display apparatus of FIG. 1;
FIG. 3 is a block diagram illustrating in detail the structure of the image output unit 130 of FIG. 2;
FIGS. 4A and 4B are provided to explain a method of reproducing a three dimensional (3D)image according to an exemplary embodiment;
FIG. 5 is a view provided to explain a scanning method according to the 3D image reproducing method illustrated in FIGS. 4A and 4B;
FIGS. 6A and 6B are views provided to explain a method of reproducing a 3D image according to another exemplary embodiment;
FIG. 7 is a view provided to explain a scanning method according to the 3D image reproducing method illustrated in FIGS. 6A and 6B; and
FIG. 8 is a flowchart provided to explain a driving method of a 3D image display apparatus according to an exemplary embodiment.

### DETAILED DESCRIPTION OF EXEMPLARY EMBODIMENTS

Certain exemplary embodiments will now be described in greater detail with reference to the accompanying drawings.

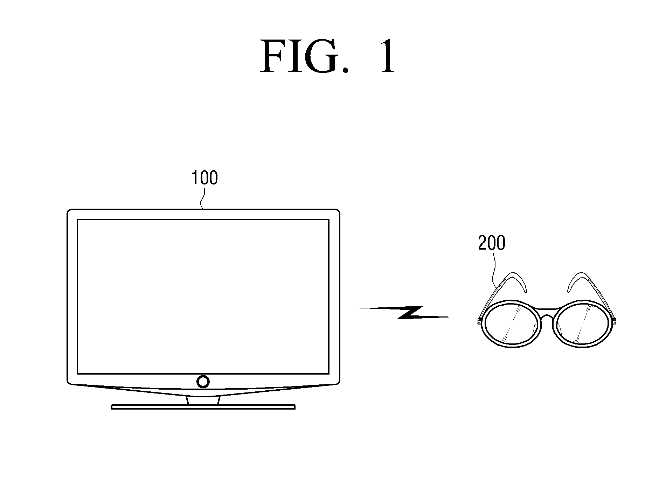

FIG. 1 illustrates a 3D image display system according to an exemplary embodiment. As illustrated, the 3D image display system may include a 3D image display apparatus 100 which displays a 3D image thereon, and 3D glasses 200 through which a viewer sees the 3D image.

The 3D image display apparatus 100 is a display apparatus, which may receive a 3D image from a photographing device such as a camera, or receive a 3D image from a broadcasting station where an image captured through a camera is edited and/or processed and transmitted, process the received 3D image and display the result. Particularly, the 3D image display apparatus 100 may process left-eye images and right-eye images with reference to the 3D image format, and cause the processed left- and right-eye images to be time-divided and displayed alternately.

The passive-type 3D glasses 200 may be applied herein, in which left-eye and right-eye glasses have different polarizations from each other. The passive-type glasses have advantages over active type shutter glasses in terms of lighter weight and cheaper cost.

In one exemplary embodiment, the 3D image providing system may additionally include a camera (not illustrated) which generates a 3D image.

The camera (not illustrated), as a photographing device which generates a 3D image, generates a left-eye image and right-eye image and provides these to the viewer's left and right eyes, respectively. The viewer experiences the illusion of depth based on the binocular disparity as the left and right-eye images are provided to the viewer's left and right eyes alternately.

Accordingly, the camera (not illustrated) may include a left-eye camera which generates a left-eye image, and a right-eye camera which generates a right-eye image, in which the left and right-eye cameras are at a predetermined distance from each other in consideration of a distance between left and right eyes of the viewer.

The camera (not illustrated) may transmit the photographed left and right-eye images to the 3D image display apparatus 100. Specifically, the camera (not illustrated) may transmit the left and right-eye images in a format in which only one of the left and right-eye images is presented on each frame, or in a format in which both the left and right-eye images are presented on each frame.

The camera (not illustrated) may determine one of the various 3D image formats and generate and transmit the 3D image to the 3D image display apparatus 100 in the determined format.

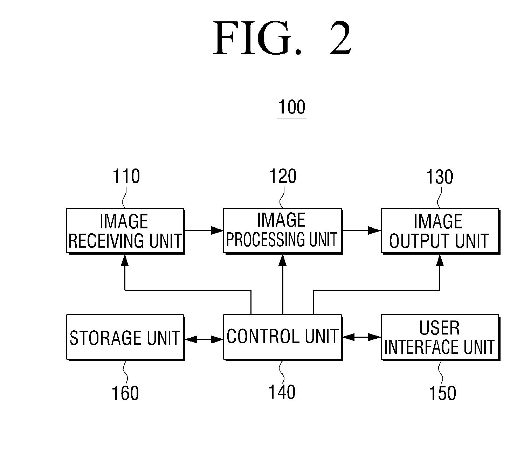

FIG. 2 is a block diagram of the 3D image display apparatus 100 of FIG. 1.

Referring to FIG. 2, the 3D image display apparatus 100 may include an image receiving unit 110, an image processing unit 120, an image output unit 130, a control unit 140, a user interface unit (150), and a storage unit 160.

The image receiving unit 110 may receive a broadcast from a broadcasting station or satellite by wires or wirelessly, and demodulate the received broadcast. Additionally, the image receiving unit 110 may be connected to an external device such as a camera to receive a 3D image therefrom. The image receiving unit 110 may be connected to the external device wirelessly, or by wires such as interfaces including S-Video, component, composite, D-Sub, DVI, or HDMI.

As explained above, the 3D image includes at least one frame, in which both or either of the left and right-eye images are presented on each frame. In other words, a 3D image may be generated in accordance with various 3D formats.

Accordingly, 3D images in various formats may be received at the image receiving unit 110, and the formats may include, namely, top-bottom, side by side, horizontal interleave, vertical interleave or checker board, or sequential frame format.

The image receiving unit 110 may transmit the received 3D image to the image processing unit 120.

The image processing unit 120 may perform additional processing with respect to the received 3D image such as video processing including video decoding, format analysis, or video scaling, or GUI adding.

The image processing unit 120 may particularly generate a left-eye image and a right-eye image in a size corresponding to the size of a screen (e.g., 1920*1080), respectively.

That is, if the 3D image is in top-bottom, side by side, horizontal interleave, vertical interleave or checker board, or sequential frame format, the image processing unit 120 may extract a left-eye image portion and a right-eye image portion from each image frame, and generate a left-eye image and a right-eye image to be provided to the viewer by up-scaling or interpolating the extracted left and right-eye images.

Additionally, if the 3D image is in a general frame sequence format, the image processing unit 120 may extract a left-eye image or a right-eye image from each frame and provide the extracted image to the viewer.

Meanwhile, a 3D image signal may or may not include information about the format of the received 3D image.

For example, if a 3D image signal includes information about the format of the received 3D image, the image processing unit 120 may analyze the 3D image to extract the information about the format, and process the received 3D image based on the extracted information. Otherwise, that is, if the 3D image signal does not include the information about the format of the received 3D image, the image processing unit 120 may process the received 3D image based on a format which may be input by the viewer, or set in advance.

The image processing unit 120 may time-divide the extracted left and right-eye images and then transmit the resultant data to the image output unit 130 alternately. That is, the image processing unit 120 may transmit the left and right-eye images to the image output unit 130 in an order of: left-eye image (L1) -> right-eye image (R1) -> left-eye image (L2) -> right-eye image (R2) -> and so on.

The image output unit 130 may output the left and right-eye images output from the image processing unit 120 alternately, and provide the left and right-eye images to the viewer.

Particularly, the image output unit 130 may include a polarization film (or polarization sheet or panel) which is capable of switching the direction of polarization so that it is possible to provide different directions of polarization with respect to the left and right-eye images being displayed by switching the direction of polarization of the polarization film.

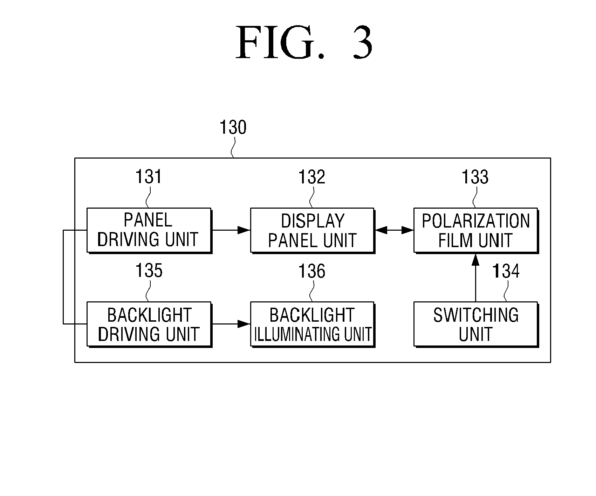

That is, the polarization film may switch the direction of polarization to a first polarization direction if a left-eye image is being displayed, and then switch to a second polarization direction if a right-eye image is being displayed. The polarization film may be configured as an active retarder which is not n-divided. The image output unit 130 will be explained in greater detail below with reference to FIG. 3.

The control unit 140 may control the overall operation of the 3D image display apparatus 100 according to a user command transmitted via the user interface unit 150.

The control unit 140 may particularly control the image receiving unit 110 and the image processing unit 120 in a manner in which a 3D image is received and divided into a left-eye image and a right-eye image, and each of the left and right-eye images is scaled or interpolated to a size displayable on one screen.

Additionally, the control unit 140 may control the image output unit 130 so that the direction of polarization of the image being provided through the image output unit 130 corresponds to the left-eye image or the right-eye image.

The user interface unit 150 may transmit a user command received through an input unit such as a remote controller, to the control unit 140.

The storage unit 160 may store various programs necessary to operate the 3D image display apparatus 100, and be configured as a memory, a hard disk drive, or the like.

In one exemplary embodiment, the 3D glasses (not illustrated) may be passive 3D glasses. The passive 3D glasses have different directions of polarization for each of the left and right eyes. The passive 3D glasses will not be explained in detail for the sake of brevity.

FIG. 3 is a block diagram showing the detailed structure of the image output unit 130 of FIG. 2.

Referring to FIG. 3, the image output unit 130 may include a panel driving unit 131, a display panel unit 132, a polarization film unit 133, a switching unit 134, a backlight driving unit 135, and a backlight illuminating unit 136.

The display panel unit 132 may operate to display the left and right-eye images and be configured as an LCD panel.

The panel driving unit 131 may operate to drive the display panel unit 132 according to the control of the control unit 140.

The polarization film unit 133 may be provided to correspond to the entire area of the display panel unit 132, and configurable as a single polarization film capable of adjusting its direction of polarization.

Specifically, the polarization film unit 133 may include a specific function cell which is capable of controlling the direction in which an image is presented on the surface of the polarization film.

The switching unit 134 may switch to a first polarization direction if a left-eye image is being displayed, and switch to a second polarization direction if a right-eye image is being displayed. In other words, the switching unit 134 may cause the polarization film unit 133 to be synchronized with a signal from the display panel unit 132.

For example, the switching unit 134 may switch the polarization direction of the polarization film unit 133 to the first polarization direction to correspond to the left-eye polarization of the polarization glasses (3D glasses), if a left-eye image is displayed on the display panel unit 132. The left-eye polarization may include, for example, a left circle polarization, a left oval polarization, or the like.

The switching unit 134 may switch the polarization direction of the polarization film unit 133 to the second polarization direction to correspond to the right-eye polarization of the polarization glasses (3D glasses), if a right-eye image is displayed on the display panel unit 132. The right-eye polarization may include, for example, a right circle polarization, a right oval polarization, or the like.

In one example, the polarization film unit 133 and the switching unit 134 may be configured as an active retarder which is phase shift (P/S) switchable.

Meanwhile, the control unit 140 may control the display panel unit 132 to display a black image in between the left and right-eye images. In this case, the display panel unit 132 may be configured as a 240 Hz LCD panel. The presence of a black image prevents mixture of the left and right-eye images.

Additionally, the image output unit 130 may include the backlight illuminating unit 136 which emits light onto the display panel unit 131, and the backlight driving unit 135 which drives the backlight illuminating unit 136.

The backlight driving unit 135 may include a plurality of scanning pulses to form one frame period, and generate a scanning signal, which is adjustable based on the control by the control unit 140, to drive the backlight illuminating unit 136.

The backlight illuminating unit 136 may emit light onto the display panel unit 132, and may use one of: light emitting diode (LED); cold cathode fluorescent lamp (CCFL); hot cathode fluorescent lamp (HCFL); hot cathode fluorescent lamp (HCFL); surface-conduction electron-emitter display (SED); and field emission display (FED), as a light source. The backlight illuminating unit 136 may be divided into a predetermined number of areas and scan-driven by the backlight driving unit 135. Herein, the predetermined number of areas may be line-based, or block-based. The blocks may be a predetermined number of lamps, and the backlight driving unit 135 may be configured to turn on and off based on a block unit.

In the above example, the control unit 140 may control the backlight driving unit 135 to drive the backlight illuminating unit 136 at a predetermined time point during displaying of the left and right-eye images. In this example, the display panel unit 132 may be configured as a 120 Hz LCD panel which does not have a function of black image insertion, because the backlight illuminating unit 136 is driven at a predetermined time point during displaying of the left and right-eye images to prevent the mixture of the images.

Although the display panel unit 132, the polarization film unit 133, and the switching unit 134 are configured in the examples explained above as separate components, this is only written for illustrative purposes. Accordingly, other examples are possible. For example, the polarization film unit 133, and the switching unit 134 may be integrally formed with the display panel unit 132. That is, an LCD panel may be configured to include therein a display panel, a polarization film, and a polarization switch.

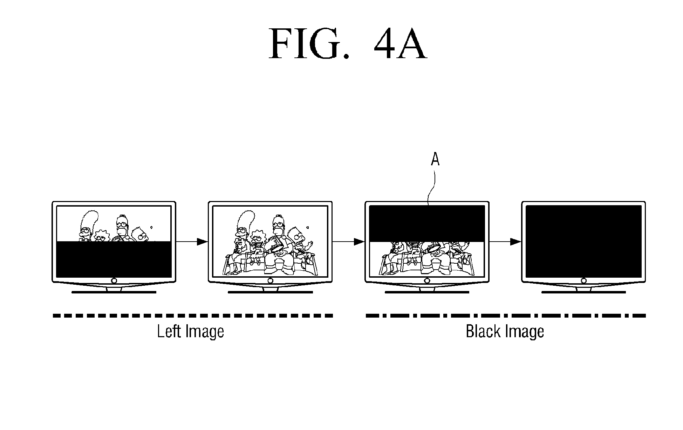

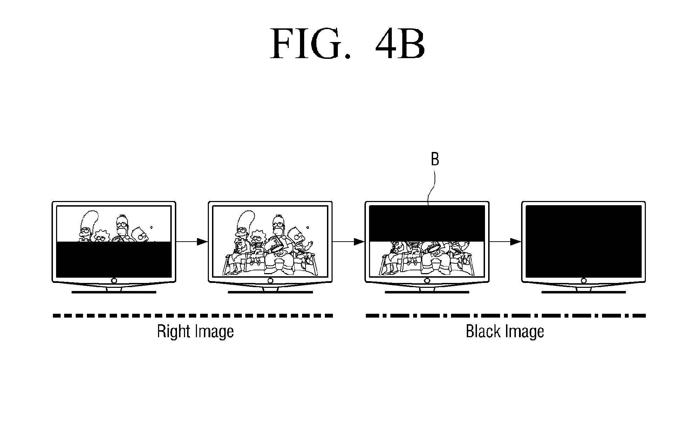

FIGS. 4A and 4B are provided to explain a method of forming a 3D image according to one exemplary embodiment. For the sake of convenience of explanation, an example in which the polarization film unit 133 and the switching unit 134 are configured as the active retarder will be explained below.

Referring to FIGS. 4A and 4B, a black image may appear after the left-eye image and before the right-eye image.

The first screen on the left-hand side of FIG. 4A illustrates a case where approximately a half of a left-eye image is displayed on the screen, while the second screen next to the first screen illustrates a case where the left-eye image is displayed on the entire screen.

The third screen next to the second screen illustrates a case where approximately a half of a black image is displayed on the screen, while the fourth screen next to the third screen illustrates a case where the black image is displayed on the entire screen.

Meanwhile, the active retarder may be driven to correspond to the left-eye polarization of the passive type polarization glasses, if a left-eye image is displayed as illustrated in FIG. 4A. That is, the polarization of the active retarder may be switched to correspond to the left-eye polarization of the passive-type polarization glasses. Unlike the conventional way, the active retarder may be one single retarder, that is, the active retarder may not be N-divided. Accordingly, unlike the complicated way of driving in the conventional N-divided active retarder, the active retarder in this exemplary embodiment can have a simple way of driving.

The first screen on the left-hand side of FIG. 4B illustrates a case where approximately a half of a right-eye image is displayed on the screen, while the second screen next to the first screen illustrates a case where the right-eye image is displayed on the entire screen.

The third screen next to the second screen illustrates a case where approximately a half of a black image is displayed on the screen, while the fourth screen next to the third screen illustrates a case where the black image is displayed on the entire screen.

The active retarder may be driven to correspond to the right-eye polarization of the passive type polarization glasses, if a right-eye image is displayed as illustrated in FIG. 4B. That is, the polarization of the active retarder may be switched to correspond to the right-eye polarization of the passive-type polarization glasses. Unlike the conventional way, the active retarder may be one single retarder, that is, the active retarder may not be N-divided. Accordingly, unlike the complicated way of driving in the conventional N-divided active retarder, the active retarder in this exemplary embodiment can have a simple way of driving.

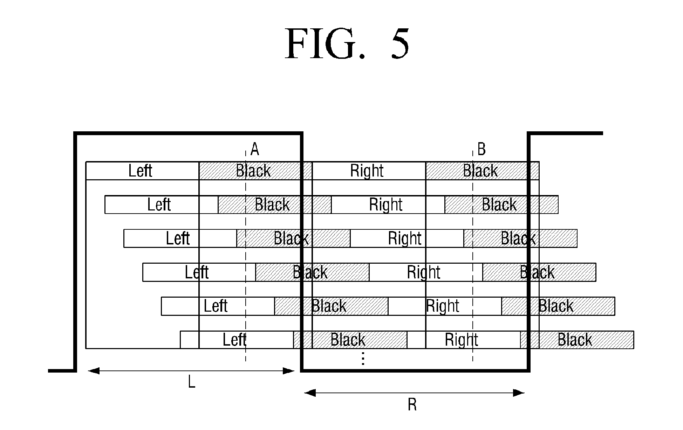

FIG. 5 is provided to explain a method of scanning that is applicable in the method of forming a 3D image illustrated in FIGS. 4A and 4B.

Referring to FIG. 5, the horizontal lines represent time domain, while the vertical lines represent the space domain.

As illustrated in FIG. 5, an image is displayed at each of the scanning lines in the order of: left-eye image (Left) -> black image (Black) -> right-eye image (Right) -> black image (Black) -> left-eye image (Left) -> and so on.

At a time point corresponding to 'A' in FIG. 5, the screen may be configured in a manner similar to the third screen (A) from the left-hand side of FIG. 4A in which the black image occupies an upper half of the screen and the left-eye image occupies a lower half of the screen.

At a time point corresponding to 'B' in FIG. 5, the screen may be configured in a manner similar to the third screen (B) from the left-hand side of FIG. 4B in which the black image occupies an upper half of the screen and the right-eye image occupies a lower half of the screen.

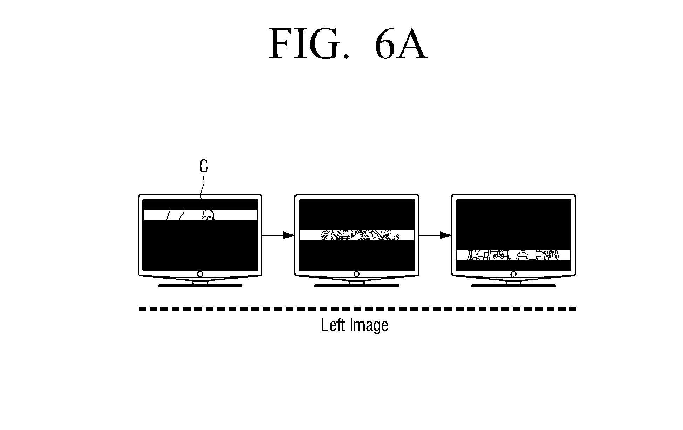

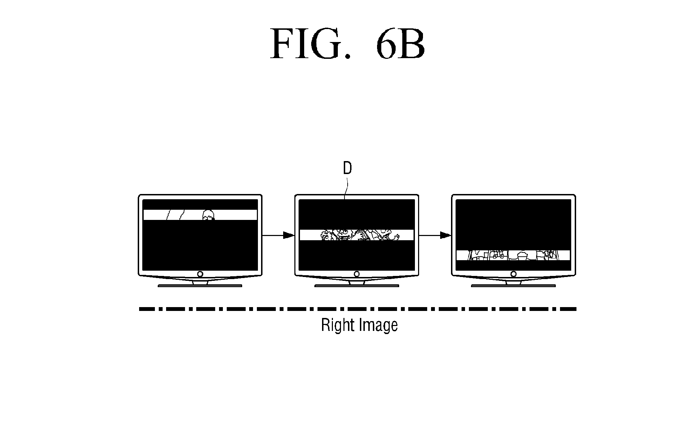

FIGS. 6A and 6B are views provided to explain a method of forming a 3D image according to another exemplary embodiment. For the sake of convenience of explanation, an example where the polarization film unit 132 and the switching unit 133 are configured as the active retarder will be explained below.

Referring to FIG. 6A, the backlight illuminating unit 136, which emits light onto the display panel unit 132, may be turned on for a predetermined time during which a left-eye image is displayed.

Additionally, the active retarder 133, 134 may be driven to correspond to the left-eye polarization of the passive type polarization glasses, if a left-eye image is displayed as shown in FIG. 6A. In other words, the polarization of the active retarder may be switched to correspond to the left-eye polarization of the passive type polarization glasses.

In the above example, the active retarder may be configured as one single retarder, that is, the active retarder may not be N-divided.

The active retarder 133, 134 may be driven to correspond to the right-eye polarization of the passive type polarization glasses, if a right-eye image is displayed as shown in FIG. 6B. In other words, the polarization of the active retarder may be switched to correspond to the right-eye polarization of the passive type polarization glasses.

In the above example, the active retarder may be configured as one single retarder, that is, the active retarder may not be N-divided.

If impulsive scanning backlight is utilized, a display on the screen is viewable only when the backlight is turned on. Accordingly, mixture of left and right-eye images is prevented.

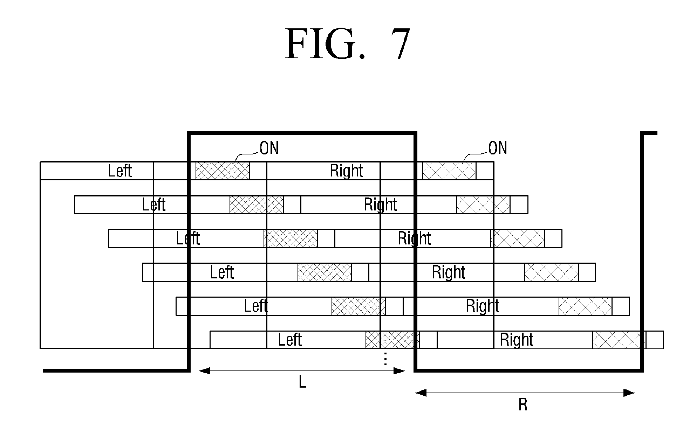

FIG. 7 is provided to explain a method of scanning which is applicable in the method of forming a 3D image illustrated in FIGS. 6A and 6B.

Referring to FIG. 7, the horizontal lines represent time domain, while the vertical lines represent the space domain.

As illustrated in FIG. 7, an image is displayed at each of the scanning lines in the order of: left-eye image (Left) -> right-eye image (Right) -> left-eye image (Left) -> and so on.

If the impulsive scanning backlight is utilized, the backlight may be turned on only for a previously set time period in timing with the scanning of the left or right-eye image. That is, a visually impulsive image may be provided by turning on the backlight illuminating unit 136 to emit light onto the display panel unit 132 only for a previously set time period of the duration in which the left and right-eye images are displayed.

Referring to FIG.7, the checkered areas marked as 'ON' represent the time duration in which the backlight unit 136 is turned on. Although the backlight illuminating unit 136 is illustrated as being turned on at a relatively later time point during displaying of the left and right-eye images, this is written only for illustrative purpose. The time point to turn on the backlight illuminating unit 136 may be determined in various ways, depending on design.

Meanwhile, although an example above explained the 'backlight blinking' in which a BLU forming the backlight illuminating unit 136 is entirely turned on or off, depending on needs, other manners such as the 'backlight scrolling' in which the BLU is turned off based on a lamp unit, may be utilized.

Furthermore, although the left-eye image is displayed first and the right-eye image follows after that in the example explained above, this is only written for illustrate purpose. Accordingly, the order of displaying the left and right-eye images may vary depending on design.

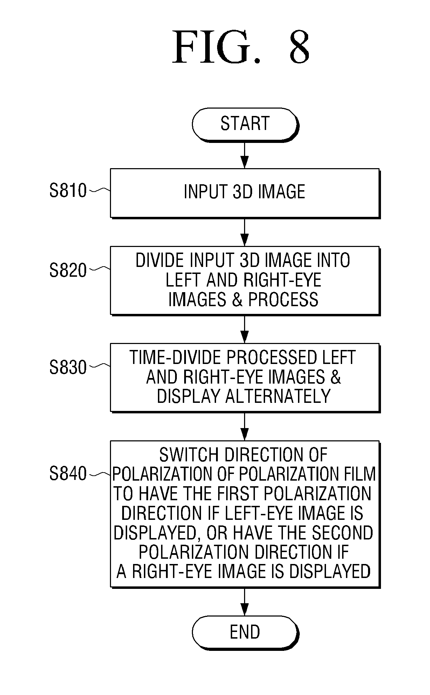

FIG. 8 is a flowchart provided to explain a method of driving a 3D image display apparatus according to one exemplary embodiment.

Referring to FIG. 8, at S810, a 3D image is input, and at S820, the input 3D image is divided into a left-eye image and a right-eye image and processed.

At S830, the left and right-eye images processed at S82 are time-divided and displayed alternately.

At S840, through one sheet of polarization film which is capable of switching the direction of polarization, the polarization direction of the image is switched to a first direction if a left-eye image is displayed, or to a second direction if a right-eye image is displayed.

The 3D image display apparatus may include an image output unit to output the left and right-eye images, in which the image output unit may include a display panel to display the left and right-eye images, one sheet of polarization film which corresponds to the entire area of the display panel and which is capable of adjusting the polarization direction, and a switching element which switches to the first polarization direction if a left-eye image is displayed, or to the second polarization if a right-eye image is displayed.

Displaying a black image in between the left and right-eye images may additionally be implemented. Accordingly, mixture of left and right-eye images can be prevented. The 240 Hz LCD panel may be implemented as the display panel.

The image output unit may additionally include a backlight illuminating element to emit light onto the display panel. Furthermore, turning on a backlight illuminating element for a predetermined time during displaying of the left and right-eye images may be additionally implemented. The display panel may be configured as the 120 Hz LCD panel.

The polarization film and the switching element may be configured as one single, i.e., nondivided active retarder.

In one exemplary embodiment, a method of forming a 3D image may reduce complicity involved with the N-divided active retarder, such as complicated driving or structural alignment, by using an nondivided active retarder.

Since the disadvantages involved with the N-divided active retarder, such as the complicated driving or alignment of structure, is reduced, cross-talk, which is generated mainly due to the abovementioned problems, may be prevented.

The foregoing exemplary embodiments and advantages are merely exemplary and are not to be construed as limiting the present inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A three dimensional (3D) image display apparatus, comprising:
an image input unit which receives a 3D image;
an image processing unit which divides the received 3D image into a left-eye image and a right-eye image and processes the left and the right-eye images;
an image output unit which comprises one sheet of polarization film which is capable of switching a direction of polarization to provide a different direction of polarization with respect to the left and the right-eye images being displayed, by switching the direction of polarization of the polarization film; and
a control unit which controls the image output unit so that the left and the right-eye images processed at the image processing unit are time-divided and displayed alternately.

2. The 3D image display apparatus of claim 1, wherein the image output unit further comprises:
a display panel unit which displays the left and the right-eye images;
a polarization film unit which comprises the one sheet of polarization film which corresponds to an entire area of the display panel unit; and
a switching unit which switches the direction of polarization of the polarization film to provide a first polarization direction if the left-eye image is displayed, or provide a second polarization direction if the right-eye image is displayed.

3. The 3D image display apparatus of claim 2, wherein the control unit controls the display panel unit to display a black image in between the left-eye image and the right-eye image.

4. The 3D image display apparatus of claim 3, wherein the display panel unit is a 240 Hz LCD panel.

5. The 3D image display apparatus of any one of claims 2 to 4, wherein he image output unit further comprises:
a backlight illuminating unit which emits light onto the display panel unit; and
a backlight driving unit which drives the backlight illuminating unit, wherein the control unit which controls the backlight driving unit to drive the backlight illuminating unit for a predetermined time period while the left and the right-eye images are displayed.

6. The 3D image display apparatus of claim 5, wherein the display panel unit is a 120 Hz LCD panel.

7. The 3D image display apparatus of any one of claims 2 to 6, wherein the polarization film unit and the switching unit are configured as an active retarder which is not divided.

8. A method of driving a three dimensional (3D) image display apparatus, comprising:
receiving a 3D image;
dividing the received 3D image into a left-eye image and a right-eye image and processing the left and the right-eye images;
time-dividing the processed left and the processed right-eye images and displaying the left and the right-eye images alternately; and
switching the direction of polarization of a one sheet of polarization film which is capable of switching a direction of polarization, to provide different directions of polarization with respect to the left and the right-eye images being displayed.

9. The method of claim 8, wherein the 3D image display apparatus comprises an image output unit which outputs the left and the right-eye images, wherein the image output unit comprises,
a display panel which displays the left and the right-eye images,
one sheet of film which corresponds to an entire area of the display panel and is capable of switching the direction of polarization, and
a switching element which switches the direction of polarization of the polarization film to provide a first polarization direction if the left-eye image is displayed, or provide a second polarization direction if the right-eye image is displayed.

10. The method of claim 9, further comprising displaying a black image in between the left-eye image and the right-eye image.

11. The method of claim 10, wherein the display panel is a 240 Hz LCD panel.

12. The method of any one of claims 9 to 11 further comprising turning on a backlight illuminating element of the image output unit for a predetermined time period and while the left and the right-eye images are displayed.

13. The method of claim 12, wherein the display panel is a 120 Hz LCD panel.

14. The method of any one of claims 9 to 13, wherein the polarization film unit and the switching unit are configured as an active retarder which is not divided.
